# DEMANDE DE BREVET EUROPEEN

(11) **EP 3 929 749 A1**
(43) Date de publication de la demande: **29.12.2021**
(21) Numéro de dépôt: 20305718.7
(22) Date de dépôt: 26.06.2020
(51) Int. Cl.: G06F 9/54, G06F 9/48

(54) **PROCEDE ET DISPOSITIF D'EXECUTION DISTANTE DE PROGRAMMES D'OBJET CONNECTE DANS UN RESEAU LOCAL**

(71) Demandeur: BULL SAS, 78340 Les Clayes sous Bois (FR)
(72) Inventeur: DEMEILLIEZ, Bruno, 38380 Saint Laurent du Pont (FR); CHAABANE, Wajih, 73000 Chambery (FR); AIELLO, Damien, 38500 La Buisse (FR)
(74) Mandataire: IPAZ

(57) **Abrégé**

L'invention porte sur un procédé d'exécution distante (1) de programmes d'objets connectés dans un réseau local (11), ledit réseau local (11) comprenant un dispositif informatique d'exécution (20) et au moins un objet connecté demandeur (loT1); ledit procédé d'exécution distante comprenant :
- une étape de requête d'exécution distante (100), comportant l'envoi d'un message de requête d'exécution distante ;
- une étape de vérification (200) d'une exécution préalable du programme d'objet connecté ;
- une étape de planification d'exécution (300), comprenant l'identification d'un créneau d'exécution disponible;
- une étape d'exécution distante (400) du programme d'objet connecté, au cours du créneau d'exécution disponible,
- une étape d'enregistrement (500), du profil de consommation de ressources du programme d'objet connecté ; et
- une étape d'accès (600), au résultat d'exécution.

## Description

L'invention s'intéresse au domaine objets connectés, et plus particulièrement au partage des ressources et fonctionnalités entre objets connectés. L'invention concerne en particulier un procédé d'exécution distante de programme(s) d'objet connecté dans un réseau local. L'invention concerne en outre un dispositif d'exécution distante de programme(s) d'objet connecté dans un réseau local.

### [Art antérieur]

L'internet des objets désigne l'ensemble des objets connectés à internet et correspond au domaine des Technologies de l'Information et de la Communication (ou TIC) qui est, depuis des années, en pleine expansion. Les dispositifs électroniques concernés par ces applications sont appelés des objets connectés, en ce sens qu'ils peuvent interagir au travers de sous-réseaux locaux pouvant être connectés à un réseau principal à haut débit comme l'Internet.

Les usages des objets connectés (loTs ou « Internet of Things » en terminologie anglo-saxonne) sont très variés et peuvent aller du domaine de l'e-santé à celui de la domotique en passant par les téléphones mobiles. Les objets connectés envahissent un peu plus chaque jour notre quotidien. En 2015, on comptait 4,9 milliards « objets connectés ». On parle de 25 à 150 milliards d'objets connectés en 2025 associés à une très grande diversité des domaines d'applications.

Ce nombre et cette diversité constituent un vrai défi en particulier au regard des ressources naturelles nécessaires à leur fabrication. En effet, le nombre d'objets connectés étant voué à augmenter de façon exponentielle la consommation des ressources naturelle pour la fabrication de l'ensemble de ces objets connectés représente un vrai challenge pour le futur. Par ailleurs, chaque objet connecté offre ses propres fonctionnalités et capacités reposant en général sur la puissance de calcul de l'objet connecté. Ainsi, pour bénéficier d'une pluralité de fonctionnalités, il est nécessaire de posséder une pluralité d'objets connectés et cette pluralité d'objets connectés entraine alors une multiplication de la consommation en ressources naturelles.

Cela est accentué par le développement du « edge computing » (terminologie anglo-saxonne) ou l'informatique en périphérie de réseau. Il, devient important de favoriser des solutions avec lesquelles les problématiques de calcul et de traitement sont traitées au niveau des objets connectés. Néanmoins, le edge computing peut entrainer un gaspillage de ressources naturelles pour la fabrication d'objets connectés certes puissants et capables de fonctionner sans avoir recours à la puissance d'un serveur distant mais dotés d'une puissance de calcul sous exploitée.

Il a été proposé des procédés et dispositifs de partage de fonctions entre objets connectés (US2016/328556) permettant aux objets connectés d'avoir accès à une seule machine donnant accès à toutes les applications hébergées localement comme une application de serveur de stockage de fichiers, de gestion des relations client, de gestion de contenu... Pour cela, ladite machine présente plusieurs interfaces connectées à différents réseaux ainsi qu'une capacité à héberger plusieurs applications à l'aide par exemple de machine virtuelle. Néanmoins, une telle machine ne permet pas une interaction dynamique avec les objets connectés permettant de compenser des éventuelles puissances de calcul sous dimensionnées d'objet connectés.

Aussi, il a été proposé des méthodes pour la sécurisation de données partagées dans un environnement réseau (WO2014/000495). Ainsi, les ressources informatiques d'un fournisseur sont mises en commun, notamment dans un environnement Cloud, pour servir plusieurs utilisateurs à l'aide d'un modèle multi-locataire, avec différentes ressources physiques et virtuelles attribuées et réaffectées dynamiquement en fonction de la demande. Néanmoins, ces solutions ne permettent ni ne proposent aux objets connectés un espace d'exécution pour leurs fonctionnalités afin de limiter les besoins en ressources ni une conception moins exigeante en termes de ressources afin de réduire les coûts de production/fabrication.

Enfin, il a également été proposé des méthodes de partage de ressources pour une pluralité d'objets connectés (WO2014/176426), particulièrement pour la coordination de l'utilisation des ressources entre objets connectés. Pour cela, des objets connectés de type super-agent sont mis en place pour organiser en fonction d'activités similaires ou fonctionnent similaire sur certaines ressources les objets connectés appartenant à leur réseau. Ces objets connectés (gestionnaire ou super agent) peuvent en outre allouer à ces autres objets connectés une certaine durée ou période de temps, un emplacement, basé sur l'occupation ou l'utilisation d'une ressource particulière, et sur un certain état opérationnel. Bien que ces solutions permettent en partie de répondre à une certaine organisation d'accessibilité aux ressources, ces solutions ne permettent ni ne proposent aux objets connectés un mécanisme de gestion partagée des ressources de calcul afin de permettre une limitation des besoins en ressources ou une conception moins exigeante en termes de ressources.

Ainsi, il existe un besoin pour de nouveaux procédés, dispositifs ou systèmes pour permettre la mutualisation de ressources de calcul entre objets connectés au sein d'un même réseau local de façon à réduire leur besoin en ressources naturelles et donc les coûts de fabrication de ces objets connectés.

### [Problème technique]

L'invention a pour but de remédier aux inconvénients de l'art antérieur. En particulier, l'invention a pour but de proposer un procédé d'exécution distante de programmes d'objet connecté dans un réseau local, ledit procédé permettant une mutualisation des ressources de calcul au sein d'un réseau local. Un tel procédé selon l'invention permet de réduire la consommation en ressources naturelles et particulièrement en ressources naturelles rares et donc de réduire les coûts de fabrication d'objets connectés.

L'invention a en outre pour but de proposer un dispositif d'exécution distante de programme(s) d'objet connecté dans un réseau local, ledit dispositif pouvant utiliser ses ressources de calcul pour répondre aux besoins d'objets connectés.

### [Brève description de l'invention]

A cet effet, l'invention porte sur un procédé d'exécution distante de programme(s) d'objet connecté dans un réseau local, ledit réseau local comprenant un dispositif informatique d'exécution et au moins un objet connecté demandeur, ledit dispositif informatique d'exécution comportant : une mémoire de données configurée pour stocker des informations d'exécution ordonnancées et des profils de consommation de ressources de programme d'objet connecté ; ledit procédé d'exécution distante comprenant :
- une étape de requête d'exécution distante, par l'objet connecté demandeur, ladite étape comportant l'envoi d'un message de requête d'exécution distante de l'objet connecté demandeur au dispositif informatique d'exécution, ledit message de requête d'exécution distante comportant des règles d'exécution pour l'exécution d'un programme d'objet connecté ;
- une étape de vérification d'une exécution préalable du programme d'objet connecté par le dispositif informatique d'exécution ;
- une étape de planification d'exécution, par le dispositif informatique d'exécution, du programme d'objet connecté en fonction des informations d'exécution ordonnancées mémorisées, des profils de consommation de ressources mémorisés et des règles d'exécution du message de requête d'exécution distante, ladite planification comprenant l'identification d'un créneau d'exécution disponible, ledit créneau d'exécution disponible étant un créneau d'exécution exclusive par exemple lorsqu'il s'agit d'une première exécution du programme d'objet connecté par le dispositif informatique d'exécution; ou un créneau d'exécution parallélisé, ledit créneau d'exécution parallélisé étant un créneau d'exécution partagé par exemple lorsqu'il s'agit d'une deuxième exécution du programme d'objet connecté par le dispositif informatique d'exécution ;

- une étape d'exécution distante du programme d'objet connecté, par le dispositif informatique d'exécution, au cours du créneau d'exécution disponible, de façon à générer un résultat d'exécution ;
- une étape d'enregistrement, par le dispositif informatique d'exécution, du profil de consommation de ressources du programme d'objet connecté lorsqu'il s'agit d'une première exécution du programme d'objet connecté par le dispositif informatique d'exécution ; et
- une étape d'accès, par l'objet connecté demandeur, au résultat d'exécution.

Le procédé selon l'invention permet de mettre à la disposition d'objets connectés demandeurs un dispositif informatique d'exécution capable de mettre à disposition ses ressources (CPU, mémoires, stockages ...) ainsi que des environnements d'exécution pour les objets connectés demandeurs présents dans son réseau local.

Ainsi, lorsqu'un objet connecté demandeur veut faire exécuter un programme par le dispositif informatique d'exécution, il le contacte afin d'obtenir un créneau disponible pour cette exécution. Comme cela sera détaillé par la suite, il peut indiquer le type d'environnement désiré, et une URL permettant de télécharger le code du programme d'objet connecté à exécuter. L'ensemble de ces informations peuvent être stockées par le dispositif pour pouvoir être utilisées ultérieurement.

En outre, le dispositif informatique d'exécution est configuré pour prendre en compte les profils de consommation de ressources des programmes d'objet connecté. Comme cela sera décrit par la suite cela permet de planifier les exécutions et de mettre à jour le planning à chaque nouvelle demande d'exécution pour permettre un ordonnancement des exécutions pour un traitement des plus rapides des exécutions à réaliser. Il sera ainsi possible d'optimiser l'utilisation des ressources du dispositif en parallélisant certaines exécutions de programmes.

**Selon d'autres caractéristiques optionnelles du procédé, ce dernier peut inclure facultativement une ou plusieurs des caractéristiques suivantes, seules ou en combinaison :**
- Le procédé comporte en outre une étape d'identification, par le dispositif informatique d'exécution , de nouvelles règles d'exécution prioritaires, lesdites nouvelles règles d'exécution prioritaires étant relatives à une première exécution du programme d'objet connecté par le dispositif informatique d'exécution. Le procédé comporte en outre une étape d'ordonnancement prioritaire, par le dispositif informatique d'exécution, des nouvelles règles d'exécution prioritaires en fonction des informations d'exécution ordonnancées mémorisées, des profils de consommation de ressources mémorisés et des règles d'exécution du message de requête d'exécution distante, ladite étape d'ordonnancement prioritaire comportant, en l'absence de créneau d'exécution exclusive, l'identification d'un créneau d'exécution parallélisé. Ainsi, un message prioritaire pourra être traité même en l'absence de créneau d'exécution exclusive disponible par exemple dans un délai d'exécution demandé.
- Le procédé comporte en outre une étape d'identification, par le dispositif informatique d'exécution, de nouvelles règles d'exécution récurrentes. Le procédé comporte en outre une étape d'ordonnancement de calibration, par le dispositif informatique d'exécution, des nouvelles règles d'exécution récurrentes en fonction des informations d'exécution ordonnancées mémorisées, des profils de consommation de ressources mémorisés et des règles d'exécution du message de requête d'exécution distante, ladite étape d'ordonnancement de calibration comportant une attribution d'un premier créneau d'exécution exclusive,
   - une étape d'enregistrement, par le dispositif informatique d'exécution, du profil de consommation de ressources du programme d'objet connecté lors du premier créneau d'exécution exclusive; et
   - une étape d'ordonnancement récurrent pour l'attribution de créneaux d'exécution parallélisés récurrents en fonction des informations d'exécution ordonnancées mémorisées, des profils de consommation de ressources mémorisés et du profil de consommation de ressources du programme d'objet connecté lors du premier créneau d'exécution exclusive.
      Ainsi, lorsqu'un programme d'objet connecté est à exécuter à plusieurs reprises, le procédé selon l'invention permet de prévoir dès la fin de la première exécution, les créneaux disponibles les plus adaptés en fonction du profil de consommation enregistré.
- le dispositif informatique d'exécution présente un référentiel comprenant des règles de priorisation en fonction de programme(s) d'objet connecté à exécuter et en ce que l'étape de planification d'exécution prend également en compte les règles de priorisation. Ainsi, même en absence de niveau de priorité dans le message de requête, le procédé peut être configuré pour prioriser certains programmes d'objet connectés.
- Le procédé comporte en outre une étape d'enregistrement du programme d'objet connecté sur la mémoire de données du dispositif informatique d'exécution. Cela évite au dispositif informatique d'exécution les aléas d'une connexion internet et permet de réduire la circulation de données sur le réseau.
- Le procédé comporte en outre une étape d'accès au programme d'objet connecté par le dispositif informatique d'exécution à partir d'une adresse URL. Cela permet au dispositif informatique d'exécution d'avoir toujours la dernière version du code à exécuter.
- Le procédé comporte en outre une étape d'enregistrement, par le dispositif informatique d'exécution, du profil de consommation de ressources du programme d'objet connecté lors d'une nouvelle exécution du programme d'objet connecté par le dispositif informatique d'exécution et il comporte une étape d'enregistrement de profils de consommation de ressources lors d'un créneau d'exécution parallélisé de programme(s) d'objet connecté et une étape de mise à jour des profils enregistrés de consommation de ressources de programme(s) d'objet connecté lors du créneau d'exécution parallélisé. Cela permet d'affiner l'ordonnancement des exécutions de programme(s) d'objet connecté.
- Le procédé comporte une étape de planification optimisée de l'exécution de programme d'objet connecté, ladite étape de planification optimisée comportant l'établissement de créneau d'exécution parallélisé optimisé permettant une consommation paramétrable d'au moins une ressource du dispositif informatique d'exécution lors du créneau d'exécution parallélisé optimisé. Ainsi, les ressources de calcul du dispositif informatique d'exécution seront utilisées au mieux et l'objet connecté demandeur recevra rapidement les résultats d'exécution.
- Le procédé comporte en outre une étape de génération, par le dispositif informatique d'exécution, d'un environnement d'exécution adapté aux objets connectés demandeurs présents dans son réseau local. Les environnements d'exécution peuvent être par exemple une machine virtuelle java, des interpréteurs Ruby ou encore Python.
- Le procédé comporte en outre une étape de génération, par le dispositif informatique d'exécution, de plusieurs environnements d'exécution adaptés aux objets connectés demandeurs présents dans son réseau local.
- Le procédé comporte en outre une étape de planification de mise à jour du programme d'objet connecté selon une règle de périodicité de mise à jour contenue dans le message de requête d'exécution distante.
- les règles d'exécution comportent en outre un protocole de communication permettant à l'objet connecté demandeur de récupérer le résultat d'exécution. Ainsi, chacun des objets connectés demandeur pourra sélectionner sa voie de récupération des résultats d'exécution.
- Le procédé comporte une étape d'acquisition de paramètres d'entrée par le dispositif informatique d'exécution avant le créneau d'exécution disponible, de préférence ladite étape d'acquisition étant réalisée au moins une heure avant le créneau d'exécution disponible. Alternativement, le ou les paramètres d'entrée peuvent être envoyé(s) avec le message de requête. L'acquisition avant le créneau d'exécution disponible est particulièrement pertinente dans le cadre d'exécutions récurrentes et elle permet aussi d'obtenir des résultats d'exécution à partir de paramètre d'entrée venant juste d'être collectés/générés.

D'autres mises en œuvre de cet aspect comprennent des systèmes informatiques, des appareils et des programmes informatiques correspondants enregistrés sur un ou plusieurs dispositifs de stockage informatiques, chacun étant configuré pour effectuer les actions d'un procédé selon l'invention. En particulier, un système d'un ou de plusieurs ordinateurs peut être configuré pour effectuer des opérations ou des actions particulières, notamment un procédé selon l'invention, grâce à l'installation d'un logiciel, micrologiciel, matériel ou d'une combinaison de logiciels, micrologiciels ou matériel installé sur le système. En outre, un ou plusieurs programmes informatiques peuvent être configurés pour effectuer des opérations ou des actions particulières grâce à des instructions qui, lorsqu'elles sont exécutées par un appareil de traitement de données, obligent l'appareil à effectuer les actions.

L'invention porte en outre sur un produit **programme d'ordinateur** pour une exécution distante de programme(s) d'objet connecté dans un réseau local, comprenant des instructions qui, lorsque le programme est exécuté par un ordinateur, conduisent celui-ci à mettre en œuvre les étapes du procédé d'exécution distante selon l'invention.

L'invention porte en outre sur **un support d'enregistrement lisible par ordinateur,** sur lequel est enregistré le produit programme d'ordinateur selon l'invention. L'invention porte en outre sur un signal d'un support de données, portant le produit programme d'ordinateur selon l'invention.

L'invention porte en outre sur un **dispositif informatique d'exécution** configuré pour réaliser une exécution distante de programme(s) d'objet connecté, ledit dispositif informatique d'exécution comportant une mémoire de données configurée pour stocker des informations d'exécution ordonnancées et des profils de consommation de ressources de programme d'objet connecté ; ledit dispositif informatique d'exécution comportant en outre un ou plusieurs processeurs configurés pour exécuter les étapes suivantes :
- une étape de réception d'une requête d'exécution distante, ladite étape de réception comportant la réception d'un message de requête d'exécution distante provenant d'un objet connecté demandeur, ledit message de requête d'exécution distante comportant des règles d'exécution pour l'exécution d'un programme d'objet connecté ;
- une étape de vérification d'une exécution préalable du programme d'objet connecté par le dispositif informatique d'exécution;
- une étape de planification d'exécution du programme d'objet connecté en fonction des informations d'exécution ordonnancées mémorisées, des profils de consommation de ressources mémorisés et des règles d'exécution du message de requête d'exécution distante, ladite planification comprenant l'identification d'un créneau d'exécution disponible, ledit créneau d'exécution disponible étant un créneau d'exécution exclusive par exemple lorsqu'il s'agit d'une première exécution du programme d'objet connecté par le dispositif informatique d'exécution; ou un créneau d'exécution parallélisé, ledit créneau d'exécution parallélisé étant un créneau d'exécution partagé lorsqu'il s'agit d'une deuxième exécution du programme d'objet connecté par le dispositif informatique d'exécution,
- une étape d'exécution distante du programme d'objet connecté au cours du créneau d'exécution disponible, de façon à générer un résultat d'exécution ;
- une étape d'enregistrement du profil de consommation de ressources du programme d'objet connecté lorsqu'il s'agit d'une première exécution du programme d'objet connecté par le dispositif informatique d'exécution; et
- une étape de mise à disposition du résultat d'exécution à l'objet connecté demandeur.

Le dispositif informatique d'exécution selon l'invention permet de mettre à la disposition d'objets connectés demandeurs ses ressources (CPU, mémoires, stockages ...) ainsi que des environnements d'exécution pour les objets connectés demandeurs présents dans son réseau local.

Ainsi, lorsqu'un objet connecté demandeur veut faire exécuter un programme par le dispositif informatique d'exécution, il le contacte afin d'obtenir un créneau disponible pour cette exécution. Comme cela sera détaillé par la suite, il peut indiquer le type d'environnement désiré, et une URL permettant de télécharger le code du programme d'objet connecté à exécuter. L'ensemble de ces informations peuvent être stockées par le dispositif pour pouvoir être utilisées ultérieurement.

En outre, le dispositif informatique d'exécution est configuré pour prendre en compte les profils de consommation de ressources de programme d'objet connecté. Comme cela sera décrit par la suite cela permet de planifier les exécutions et de mettre à jour le planning à chaque nouvelle demande d'exécution pour permettre un ordonnancement des exécutions pour un traitement des plus rapides des exécutions à réaliser. Il sera ainsi possible d'optimiser l'utilisation des ressources du dispositif en parallélisant certaines exécutions de programmes

L'invention porte en outre sur un **système** comprenant un dispositif informatique d'exécution selon l'invention et au moins un objet connecté demandeur, lesdits dispositif informatique d'exécution et objet connecté demandeur étant connectés à un même réseau local.

D'autres avantages et caractéristiques de l'invention apparaitront à la lecture de la description suivante donnée à titre d'exemple illustratif et non limitatif, en référence aux Figures annexées :
La figure 1 représente un schéma montrant une architecture informatique comprenant plusieurs objets connectés demandeurs et un dispositif informatique d'exécution ;
La figure 2 représente un schéma des principales étapes d'un procédé selon l'invention ; les étapes en pointillés étant facultatives ;
La figure 3 représente un diagramme fonctionnel illustrant un mode de réalisation d'une partie du procédé selon l'invention ;
La figure 4 représente un schéma d'un mode de réalisation d'un dispositif informatique d'exécution selon l'invention.

Des aspects de la présente invention sont décrits en référence à des organigrammes et / ou à des schémas fonctionnels de procédés, d'appareils (systèmes) et de produits de programme d'ordinateur selon des modes de réalisation de l'invention.

Sur les figures, les organigrammes et les schémas fonctionnels illustrent l'architecture, la fonctionnalité et le fonctionnement d'implémentations possibles de systèmes, de procédés et de produits de programme d'ordinateur selon divers modes de réalisation de la présente invention. A cet égard, chaque bloc dans les organigrammes ou blocs-diagrammes peut représenter un système, un dispositif, un module ou un code, qui comprend une ou plusieurs instructions exécutables pour mettre en œuvre la ou les fonctions logiques spécifiées. Dans certaines implémentations, les fonctions associées aux blocs peuvent apparaître dans un ordre différent que celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et / ou de l'organigramme, et des combinaisons de blocs dans les schémas de principe et / ou l'organigramme, peuvent être mis en œuvre par des systèmes matériels spéciaux qui exécutent les fonctions ou actes spécifiés ou effectuer des combinaisons de matériel spécial et d'instructions informatiques.

### [Description de l'invention]

Dans la suite de la description, on entend par « **dispositif informatique** » tout dispositif comprenant une unité de traitement ou un processeur, par exemple sous la forme d'un microcontrôleur coopérant avec une mémoire de données, éventuellement une mémoire programme, lesdites mémoires pouvant être dissociées. L'unité de traitement ou le processeur coopère avec lesdites mémoires au moyen d'un bus de communication interne.

L'expression « **objets connectés** » au sens de l'invention correspond à un dispositif informatique ou système électronique connecté, de préférence sans fil, à un réseau et pouvant partager des informations avec un serveur, un ordinateur, une tablette électronique, un smartphone, un réfrigérateur, une imprimante ou tout autre appareil électronique apte à se connecter à un réseau de communication. De préférence, il s'agit de tout dispositif électronique apte à se connecter à un réseau de communication. Le réseau de communication peut être par exemple un réseau internet ou un réseau intranet. La connexion peut être réalisée par de nombreux moyens de communications tels que les connexions filaires ou les connexions sans fil (par exemple Wifi ou Bluetooth).

L'expression « **programme d'objet connecté** » au sens de l'invention correspond à un ensemble d'instructions destinées à provoquer un traitement de données pour effectuer une fonction particulière directement ou indirectement (e.g. après une opération de conversion vers un autre code). De préférence, il s'agit d'un ensemble d'instruction pour le traitement de données provenant d'un objet connecté et générant un ou plusieurs résultats pouvant être exploité par l'objet connecté.

On entend par « **planification** » au sens de l'invention une programmation des connexions des exécutions du programme d'objet connecté suivant des périodes de temps déterminées.

L'expression « **sous-réseau** » ou « réseau local » au sens de l'invention correspond par exemple à des réseaux locaux, auxquels sont connectés des objets connectés, servis chacun par au moins une passerelle de connexion à un réseau principal tel qu'Internet.

On entend par « **passerelle** » ou « **passerelle de connexion** » au sens de l'invention, un équipement assurant la connexion entre des équipements appartenant à des réseaux différents, par exemple assurant la connexion des équipements d'un réseau local (adresses IP locales, pour « Internet Protocol » selon une terminologie anglo-saxonne) et des services internet (adresses IP publiques). De ce fait, une telle passerelle possède les deux types d'adresses IP. Son adresse IP publique, attribuée par le fournisseur d'accès internet, plus communément désigné par l'acronyme « FAI », lui permet d'échanger les données avec le réseau Internet. Son adresse IP locale lui permet d'échanger des données avec les équipements du réseau local. Elle est généralement spécifique et attribuée par défaut par le FAI.

On entend par « **niveaux de priorité** » ou « **niveau de priorité** » un ordonnancement croissant selon des valeurs de caractéristiques ou paramètres tels qu'une valeur de priorité qui correspond au niveau de priorité de chaque programme d'objet connecté. Autrement dit, si P(*f*IoT1) > P(*f*IoT2) alors le programme d'objet connecté de l'IoT1 sera prioritaire sur le programme d'objet connecté de l'IoT2. Cela peut également s'appliquer à des messages de requête.

Par « **créneau** » au sens de l'invention on entend un espace-temps, limité dans le temps entre deux instants. Un créneau peut correspondre à un ou plusieurs jours, une ou plusieurs semaines, un ou plusieurs mois, une ou plusieurs années, mais aussi à des périodes plus courtes telles qu'une ou plusieurs heures. De préférence créneau comprend un indicateur de début et de fin accompagné d'une durée ou bien un intervalle temporel comprend un indicateur de début ou de fin, l'indicateur étant accompagné d'une durée.

On entend par « **disponibilité** » au sens de l'invention une période de temps durant laquelle une exécution de programme d'objet connecté peut être réalisée sur un dispositif informatique d'exécution.

L'expression « **exécution distante** » au sens de l'invention correspond à l'exécution ou au traitement d'instructions d'un ou plusieurs programmes d'objets connectés sur un dispositif informatique.

L'expression « **créneau d'exécution disponible** » au sens de l'invention correspond à une période de temps durant laquelle un dispositif informatique est en mesure d'exécuter le programme d'objet connecté.

L'expression « **créneau d'exécution exclusive** » au sens de l'invention correspond à une période de temps durant laquelle un dispositif informatique est en mesure d'exécuter le programme d'objet connecté sans que d'autre exécution de programme d'objet connecté ne soit réalisée.

L'expression « **créneau d'exécution parallélisé** » au sens de l'invention correspond à une période de temps durant laquelle un dispositif informatique est configuré afin d'exécuter simultanément plusieurs programmes d'un ou plusieurs objet connecté.

Au sens de l'invention « **message** » correspond à un message envoyé entre des objets connectés ou entre passerelle; et comprenant des données pouvant inclure des informations relatives à leur état et à leur environnement. On entend par « message de requête d'exécution distante » au sens de l'invention un message envoyé par au moins un objet connecté et comprenant des règles d'exécution d'un programme d'objet connecté.

Le terme « **ressources** » au sens de l'invention correspond généralement à des ressources informatiques physique ou des ressources de calcul telles que mémoire, processeur, disque.

L'expression « **consommation de ressources** » au sens de l'invention correspond à l'utilisation ou l'occupation de ladite ressource lors du fonctionnement du dispositif informatique pour l'exécution de programme(s) d'objet connecté. Par exemple, la consommation en ressource peut correspondre pour des disques réseaux à leurs entrées/sorties, la lecture/écriture sur des disques, le taux d'utilisation de la mémoire, pour un réseau à sa bande passante, pour des processeurs à leur utilisation (en pourcent) ou au taux d'occupation des caches, pour de la mémoire vive la quantité utilisée et pour des ports. Il peut par exemple s'agir d'une valeur d'utilisation de la ressource avantageusement ramenée au pourcentage du niveau de la ressource.

Par « **seuil prédéterminé de consommation maximum** », on entend au sens de l'invention une valeur maximale associée à chaque ressource permettant un bon fonctionnement de ladite ressource. Par exemple, cela correspond aux limites maximales acceptables de consommations de ressources pour le dispositif informatique d'exécution exécutant un ou plusieurs programme(s) d'objet connecté. Ces limites peuvent être réelles ou hypothétiques et correspondent généralement à un niveau de consommation au-delà duquel des dysfonctionnements peuvent survenir et ayant pour conséquence un arrêt de la ressource, du dispositif informatique d'exécution ou bien à tout le moins des baisses de qualités de service.

L'expression « **profils de consommation de ressources** » au sens de l'invention correspond à l'obtention d'un ou plusieurs profils de consommation de chaque ressource de chaque dispositif informatique en fonction du temps pour l'exécution d'un ou plusieurs programme(s) d'objet connecté. La mesure de la consommation d'une ressource sur une période de temps ou sur un intervalle de temps peut être mesurée lors de l'exécution de programme(s) d'objet connecté. Ces valeurs peuvent être alors obtenues par une pluralité de sondes configurées pour suivre le comportement du dispositif informatique d'exécution. Ainsi, l'expression « **profils de consommation de ressources de programme(s) d'objet connecté** » au sens de l'invention correspond à l'utilisation de ressource en fonction du temps pour l'exécution du programme d'objet connecté par le dispositif informatique d'exécution.

L'expression « **informations d'exécution ordonnancées** » au sens de l'invention correspond à un ensemble de paramètres associés à l'exécution d'un programme d'objet connecté triés de préférence selon une planification. Cela peut par exemple inclure la durée d'exécution, le respect des règles d'exécution, ou les profils de consommation en ressource, les créneaux disponibles. Ainsi, il peut s'agir de toutes informations liées à l'exécution de programme d'objet connecté qui sont organisées, classées et triées de préférence selon les exécutions déjà planifiées.

Les termes ou expressions « **application** », « **logiciel** », « **code de programme** », et « **code exécutable** » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçue pour l'exécution sur un système informatique.

On entend par « **processeur** », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (« ASIC » selon une terminologie anglo-saxonne) et un circuit logique programmable. Un seul processeur ou plusieurs autres unités peuvent être utilisées pour mettre en œuvre l'invention.

On entend par « **module** » au sens de l'invention, un dispositif, un élément physique ou virtuel pouvant faire partie d'un système et pouvant posséder ses propres mécanismes interne (pilotes et périphériques etc...), capacités et fonctionnalités. Un module au sens de l'invention peut correspondre à une extension, une carte, un code, un pilote, un programme, un logiciel, un disque, un fichier, une extension, un équipement informatique, un composant ou périphérique, etc...

Par « **sonde** » ou « **sonde informatique** », on entend au sens de l'invention un logiciel associé à un équipement qui permet d'effectuer, de gérer et de faire remonter vers un équipement informatique des mesures, des valeurs de paramètres, des données de connectivité etc....

Dans les revendications, le terme **"comprendre"** ou **"comporter"** n'exclut pas d'autres éléments ou d'autres étapes.

Dans la suite de la description, les mêmes références sont utilisées pour désigner les mêmes éléments. Les signes de référence ne sauraient être compris comme limitant la portée de l'invention. En outre, les différentes caractéristiques présentées et/ou revendiquées peuvent être avantageusement combinées. Leur présence dans la description ou dans des revendications dépendantes différentes, n'excluent pas cette possibilité.

Les objets de notre quotidien ou de nos industries sont de plus en plus souvent connectés et aptes à échanger des données avec Internet. En outre, il existe de plus en plus d'objets connectés présentant une pluralité de fonctionnalités où chacune desdites fonctionnalités, nécessitant l'exécution de programme d'objet connecté dédié, ne sera utilisée que ponctuellement. Ainsi, un appareil de domotique tel qu'un réfrigérateur, un microcontrôleur de panneau solaire ou une sonde thermique pourra être configuré pour adapter son comportement en fonction d'un résultat d'exécution d'un programme d'objet connecté. Or, l'exécution de ce programme d'objet connecté nécessitera d'équiper en amont l'objet connecté des composants nécessaires à cette exécution ponctuelle. Cette consommation de ressource naturelle n'est le plus souvent faite que pour des utilisations ponctuelles et entraine un gaspillage des ressources naturelles et une augmentation du coût des objets connectés. Cette problématique est d'autant plus vraie avec la multiplication du nombre et de la diversité des objets connectés.

Ainsi, les inventeurs ont développé une nouvelle solution permettant d'encadrer une exécution distante de programme d'objet connecté et donc de confier, à un dispositif informatique d'exécution, l'exécution d'une pluralité de programmes d'objet connecté dont les résultats d'exécution seront utilisés par lesdits objets connectés pour leur fonctionnement. Le dispositif informatique d'exécution pourra alors être configuré pour exécuter le programme d'objet connecté, éventuellement dans un environnement d'exécution dédié, puis envoyer ou mettre les résultats d'exécution à disposition de l'objet connecté demandeur qui pourra utiliser ces résultats d'exécution pour certaines de ses fonctions.

L'invention va être décrite dans le contexte d'une installation domotique comportant un réseau local auquel est connecté plusieurs objets connectés demandeurs et un dispositif informatique d'exécution. L'invention ne se limite pas, toutefois, à cet exemple, et peut trouver des applications dans toutes autres configurations notamment industrielles dans lesquelles il y a un ou plusieurs sous-réseaux communiquant ou non entre eux, comprenant un ou plusieurs dispositifs informatiques d'exécutions.

L'invention se rapporte en particulier à des solutions matérielles et/ou logicielles pour l'exécution distante de programmes d'objets connectés dans un sous-réseau (i.e. réseau local). Un tel procédé 1 permet d'optimiser les ressources en termes de puissance de calcul, de mémoire, de ressource minérale et donc permet également de réduire les coûts de production des objets connectés. En outre, l'exécution se faisant sur le réseau local des objets connectés les risques de connexion au réseau principal et les risques de sécurité sont minimisés.

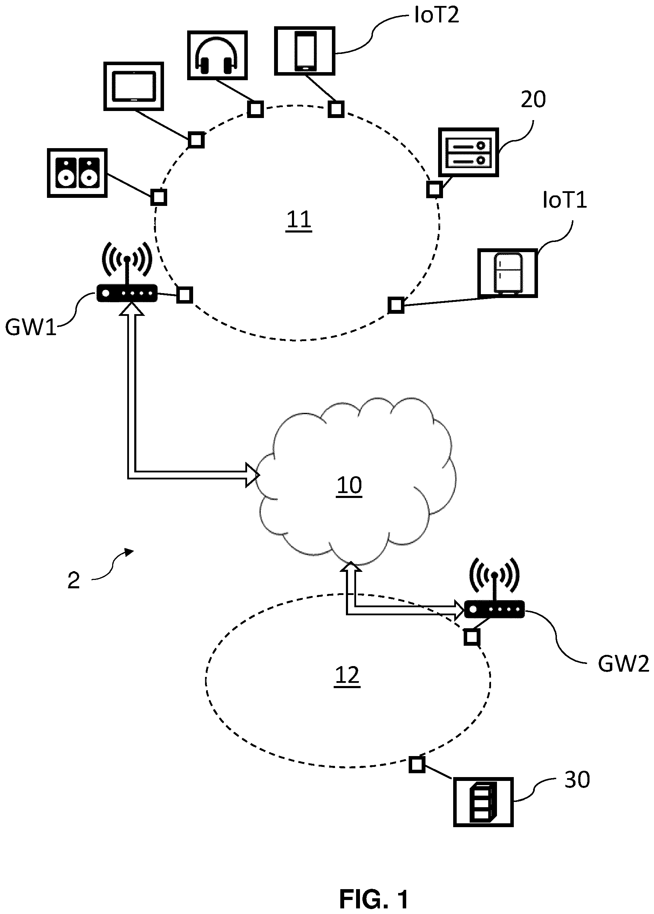

En référence au schéma de **la** **figure 1****,** une architecture à laquelle un procédé conforme à l'invention peut avantageusement s'appliquer, comprend au moins un sous-réseau tel que par exemple un réseau local 11, auquel sont connectés deux objets connectés demandeurs loT1, IoT2. Le réseau local peut être connecté au réseau principal 10. Le réseau principal 10 dans l'exemple représenté, est le réseau Internet. Le réseau principal 10 étant lui-même connecté à un autre sous réseau 12.

Dans l'exemple représenté à la figure 1, le sous-réseau 11 comprend au moins **une passerelle de connexion,** comme la passerelle de connexion GW1 à Internet. La passerelle de connexion GW2 à Internet permet par exemple de relier à internet un serveur 30 appartenant à un sous réseau 12. Les passerelles permettent le transport de données entre diverses entités physiques ou virtuelles par exemple entre des loTs distincts appartenant à des sous-réseaux différents ou à un même sous-réseau, mais aussi entre un ou plusieurs sous-réseaux et Internet. Dans certains cas, un sous-réseau peut comporter plus d'une passerelle de connexion.

Le réseau local 11 comprend **un ou plusieurs objets connectés demandeurs IoT1, IoT2.** Une pluralité d'objets connectés peut correspondre à au moins un objet connecté, à deux objets connectés, à des dizaines, à des centaines voire à des milliers d'objets connectés ; chacun ayant une puissance de traitement qui lui est propre, des exigences de qualité de service, différents types de données ayant un débit différent et par conséquent différents besoin en bande passante pour communiquer avec Internet sans porter préjudice à la qualité de service. De manière non-limitative, ces objets connectés peuvent être : un téléphone portable connecté, une tablette connectée, un ordinateur portable connecté, des enceintes connectées, un casque audio connecté, une caméra connectée, un serveur, un capteur, une installation solaire, une station météo, un réfrigérateur connecté, une imprimante connectée, un périphérique virtuel tel qu'une application, des dispositifs commerciaux ou domotiques, tels que des systèmes de gestion d'énergie et de ressource etc.... L'invention n'entend pas être limitée, ni par le nombre ni par la nature des objets ainsi connectés au sous-réseau. Il peut s'agir de tout objet électronique associé à un objet physique, lieu ou personne identifiés. Chaque objet est identifié par un code individuel unique qui le distingue de tous les autres au sein du réseau local concerné, par exemple un code-barre, un code EAN (« European Article Numbering » selon une terminologie anglo-saxonne), un code EPC (« Electronic Product Code » selon une terminologie anglo-saxonne), etc.

**Le réseau local 11 et le sous-réseau 12** peuvent être des réseaux spécifiquement dédiés aux objets connectés comme par exemple :
- un réseau Sigfox ;
- un réseau LoRa utilisant le protocole LoRaWAN (acronyme de « Long Range Wide-area Network » selon une terminologie anglo-saxonne) qui comme son nom l'indique est un réseau étendu à longue portée ; un réseau LPWA ou LPWAN
- ou bien des réseaux basés sur un autre protocole sans fil, ou filaire, y compris par des réseaux optiques par ondes radio comme par exemple :
   - un réseau à dimension personnelle (ou WPAN, de l'anglais « Wireless Personal Area Networks ») comme un réseau ZigBee basé sur la norme IEEE 802.15.4 ;
   - un réseau Wi-Fi ;ou un réseau Bluetooth (norme IEEE 802.15.1) ; etc.
- ou bien un réseau cellulaire, LTE/LTE-A 4G ou 5G.
Les objets connectés peuvent également fonctionner avec l'utilisation de protocole d'application réseau tel que le protocole d'application contraint (CoAP). Les loTs peuvent également être intégrés à des périphériques coordinateurs fournissant une chaîne de liens formant une arborescence de périphériques et de réseaux.

La présente invention se présente comme un mécanisme permettant aux objets connectés demandeurs IoT1, IoT2 appartenant à un même sous-réseau 11 de faire exécuter leurs programmes d'objet connecté par un dispositif informatique d'exécution 20. Cela leur permet de pouvoir accéder à des puissances de calcul supérieures à leur capacité et cela sans avoir à envoyer des données en dehors du réseau local 11 et donc sans saturer les connexions et en réduisant les risques de sécurité. Ces objets connectés demandeurs IoT1, IoT2 peuvent être par ailleurs connectés à un réseau principal (i.e. Internet).

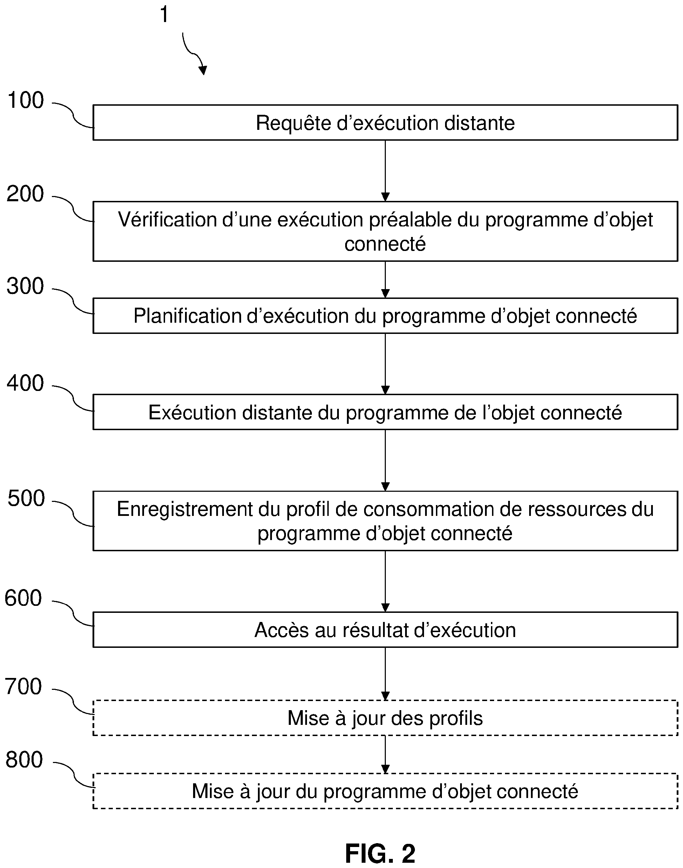

**Selon un premier aspect,** l'invention se rapporte à un **procédé d'exécution distante 1** de programmes d'objets connectés dans un réseau local 11 tel qu'illustré à la **figure 2****.**

Un procédé d'exécution distante 1 de programmes d'objets connectés dans un réseau local 11 selon l'invention comporte les étapes : de requête d'exécution distante 100 ; de vérification 200 d'une exécution préalable du programme d'objet connecté ; de planification d'exécution 300 du programme d'objet connecté ; d'exécution distante 400 du programme d'objet connecté au cours du créneau d'exécution disponible ; d'enregistrement 500 du profil de consommation de ressources du programme d'objet connecté ; et d'accès 600 au résultat d'exécution.

Un procédé d'exécution distante 1 de programmes d'objets connectés dans un réseau local 11 selon l'invention peut comporter également les étapes : de mise à jour 700 des profils enregistrés de consommation de ressources de programmes d'objet connecté et de mise à jour 800 du programme d'objet connecté.

Comme illustré à la **figure 2****,** un procédé selon l'invention comprend **une étape de requête d'exécution distante 100.** Cette étape est généralement réalisée par un objet connecté demandeur IoT1.

Elle comprend notamment l'envoi d'un message de requête d'exécution distante de l'objet connecté demandeur IoT1 au dispositif informatique d'exécution 20. Le message de requête d'exécution pourra être envoyé selon les différents formats de protocole de communication.

En particulier, le message de requête d'exécution pourra comporter des règles d'exécution pour l'exécution d'un programme d'objet connecté. Les règles d'exécution pourront par exemple être sélectionnées parmi :
- un identifiant du programme d'objet connecté à exécuter ;
- un environnement d'exécution pour le programme d'objet connecté à exécuter
- une fréquence d'exécution du programme d'objet connecté ;
- une fréquence de recherche mise à jour programme d'objet connecté ;
- un protocole de communication pour la récupération du résultat d'exécution par l'objet connecté demandeur ; en particulier, il pourra être indiquer une adresse et un protocole (https, ftp/sftp/ssh) à utiliser par le dispositif informatique d'exécution pour stocker le résultat d'exécution ;
- une date et/ou heure pour l'accès au résultat d'exécution ;
- un identifiant unique de l'objet connecté demandeur (par exemple son adresse IP) ;
- un identifiant unique pour l'exécution demandée ;
- une somme de contrôle (« Checksum » en anglais) permettant de valider l'intégrité du message transmis ;
- une date d'expiration du message ; et/ou
- un niveau de priorité pour l'exécution du programme d'objet connecté.

De façon préférée, les règles d'exécution pourront par exemple être sélectionnées parmi :
- un identifiant du programme d'objet connecté à exécuter ;
- un environnement d'exécution pour le programme d'objet connecté à exécuter
- une fréquence d'exécution du programme d'objet connecté ;
- une fréquence de recherche de mise à jour de programme d'objet connecté ;
- un protocole de communication pour la récupération du résultat d'exécution par l'objet connecté demandeur ; en particulier, il pourra être indiqué une adresse et un protocole (https, ftp/sftp/ssh) à utiliser par le dispositif informatique d'exécution pour stocker le résultat d'exécution ; et/ou
- un niveau de priorité pour l'exécution du programme d'objet connecté.

De façon préférée, les règles d'exécution comportent un identifiant du programme d'objet connecté à exécuter. L'identifiant peut aussi prendre la forme d'une adresse URL (pour Uniform Resource Locator en terminologie anglosaxonne). Le programme d'objet connecté est un programme qui serait classiquement un programme exécuté sur l'objet connecté. De façon préférée, cela peut en particulier être un programme d'objet connecté dédié, spécifique, à un objet connecté demandeur. Néanmoins, dans le cadre de la présente invention, ce programme d'objet connecté pourra être récupéré sur l'objet connecté demandeur, sur une mémoire de stockage accessible via le réseau principal 10 (e.g. internet) ou encore téléchargé et stocké sur le dispositif informatique d'exécution 20. Ainsi, le dispositif informatique d'exécution 20 sera en mesure d'exécuter le programme d'objet connecté pour le compte de l'objet connecté demandeur loT1. Alternativement, plusieurs objets connectés demandeurs peuvent souhaiter l'exécution d'un même programme d'objet connecté.

De façon préférée, les règles d'exécution comportent un identifiant pour un environnement d'exécution pour le programme d'objet connecté à exécuter. Ainsi le dispositif informatique d'exécution sera en mesure de créer l'environnement adapté à l'exécution du programme d'objet connecté. Par exemple, le dispositif informatique d'exécution pourra être amené à exécuter un programme d'objet connecté nécessitant une machine virtuelle java, des interpréteurs Ruby ou encore Python.

De façon préférée, les règles d'exécution comportent une valeur de fréquence d'exécution pour le programme d'objet connecté. En effet, certains objets connectés demandeurs IoT1 pourront avoir besoin de faire exécuter de façon périodique un programme d'objet connecté. La présence dans le message de requête d'exécution d'une valeur de fréquence d'exécution permet au dispositif informatique d'exécution 20, comme cela sera détaillé par la suite, de planifier dans le temps ces exécutions récurrentes.

De façon préférée, les règles d'exécution comportent une valeur de fréquence de recherche de mise à jour pour le programme d'objet connecté. En effet, dans un mode de réalisation, le programme d'objet connecté pourra être téléchargé par le dispositif informatique d'exécution 20 afin de réduire les accès à des ressources distantes. Dans ce cas, la valeur de fréquence de recherche de mise à jour permettra au dispositif informatique d'exécution de disposer d'un programme d'objet connecté à jour sans avoir à faire des recherches de mise à jour avant chaque exécution.

De façon préférée, les règles d'exécution comportent un niveau de priorité pour l'exécution du programme d'objet connecté par le dispositif informatique d'exécution 20. Ainsi, l'objet connecté demandeur IoT1 pourra indiquer un besoin urgent pour le résultat d'exécution. Cela peut être particulièrement avantageux dans le cas de l'exécution d'un programme d'objet connecté relatif à une mise à jour critique du système de l'objet connecté demandeur. Un niveau de priorité pourra être préconfiguré en fonction de la nature des actions et des programmes d'objet connecté concernés.
Le dispositif informatique d'exécution 20 peut également comporter un référentiel comprenant des règles de priorisation en fonction des programmes d'objet connecté à exécuter. Dans ce cas, l'étape de planification d'exécution 300 pourra également prendre en compte les règles de priorisation.

En particulier, le message de requête d'exécution pourra également comporter des paramètres d'entrée pour ledit programme d'objet connecté. De façon préférée, les paramètres d'entrée peuvent correspondre à des données d'entrée utilisées lors de l'exécution du programme d'objet connecté par le dispositif informatique d'exécution 20. En particulier, les paramètres d'entrée peuvent correspondre à des valeurs mesurées ou encore à des valeurs de configuration.

Alternativement, ces paramètres d'entrée peuvent être envoyées séparément au dispositif informatique d'exécution 20. Par exemple, le dispositif informatique d'exécution 20 pourra être configuré pour télécharger ces données juste avant l'exécution du programme d'objet connecté. Ainsi, le dispositif informatique d'exécution 20 pourra recevoir les données depuis l'objet connecté demandeur IoT1 ou bien recevoir une URL permettant d'accéder aux données.

Le procédé comprend également une étape **de vérification 200 d'une exécution préalable du programme d'objet connecté** par le dispositif informatique d'exécution 20. Un objectif de cette étape de vérification peut notamment être de déterminer si le dispositif informatique d'exécution 20 a déjà procédé à l'exécution du programme d'objet connecté.
Cette étape peut être réalisée au niveau de l'objet connecté demandeur qui peut avant ou après l'envoi du message de requête d'exécution, déterminer si le dispositif informatique d'exécution 20 a déjà exécuté ce programme pour son compte. Ainsi, il pourra envoyer l'information de préférence dans le message de requête d'exécution mais cela peut aussi être fait ultérieurement. Par exemple dans un message comportant le ou les paramètres d'entrée.
De façon préférée, cette étape est réalisée au niveau du dispositif informatique d'exécution 20 après réception du message de requête d'exécution. En effet, comme cela a été évoqué, un même programme d'objet connecté peut être exécuté pour plusieurs objets connectés demandeurs et il est plus aisé de configurer au niveau du dispositif informatique d'exécution 20 cette procédure de vérification que de la configurer au niveau de tous les objets connectés.

Le procédé comprend également une étape **planification d'exécution 300 du programme d'objet connecté.**
Cette étape est généralement menée par le dispositif informatique d'exécution 20.
La planification de l'exécution du programme d'objet connecté pourra être réalisée en fonction notamment des informations d'exécution ordonnancées mémorisées. Les informations d'exécution ordonnancées mémorisées correspondent de façon préférée aux planifications déjà réalisées par le dispositif informatique d'exécution 20 et à venir. Ainsi, le dispositif informatique d'exécution 20 prendra en compte les créneaux d'exécution déjà attribués pour attribuer de nouveaux créneau d'exécution.

En particulier, la planification de l'exécution du programme d'objet connecté prendra également en compte les profils de consommation de ressources mémorisés. Avantageusement dans le cadre d'exécutions parallélisées, le dispositif informatique d'exécution 20 pourra prendre en compte les profils de consommation de ressources des programmes d'objet connecté à exécuter en parallèle de façon à déterminer si la parallélisation avec un nouveau programme d'objet connecté est possible. Ainsi, il y a une utilisation optimale des ressources du dispositif informatique d'exécution 20 et les résultats d'exécution sont générés plus rapidement.

Enfin, la planification de l'exécution du programme d'objet connecté pourra également prendre en compte les règles d'exécution du message de requête d'exécution distante. En effet, ces règles d'exécution pourront comporter des informations ayant un impact notable sur l'attribution du créneau d'exécution telles qu'un environnement d'exécution, un niveau de priorité, une fréquence d'exécution du programme d'objet connecté ou encore une heure/date de livraison attendue du résultat d'exécution.

Ainsi, l'étape de planification d'exécution 300 du programme d'objet connecté comporte l'identification d'un créneau d'exécution disponible. L'identification d'un créneau d'exécution disponible peut également correspondre à l'identification d'au moins un créneau d'exécution disponible. Le choix du créneau d'exécution disponible à utiliser pour l'exécution du programme d'objet connecté pourra alors être fait par exemple par le dispositif informatique d'exécution 20. Le créneau d'exécution disponible pourra être un créneau d'exécution exclusive. C'est-à-dire qu'un seul programme d'objet connecté sera exécuté à un moment donné et donc qu'il ne sera pas parallélisé avec d'autres programmes d'objet connecté. Cela est particulièrement avantageux dans le cadre d'une première exécution du programme d'objet connecté par le dispositif informatique d'exécution 20. En effet, l'utilisation d'un créneau d'exécution exclusive permettra au dispositif informatique d'exécution 20 de déterminer plus finement le profil de consommation de ressource de ce programme d'objet connecté. En outre, un créneau d'exécution exclusive peut être pertinent lorsque le code a été mis à jour. En effet, l'exécution d'une nouvelle version d'un programme d'objet connecté peut être considérée comme une première exécution.
Alternativement, s'il n'y a pas de créneau d'exécution exclusive de disponible, sur une durée prédéterminée (e.g. une heure, 6 heures, une journée) alors le dispositif informatique d'exécution 20 peut être configuré pour fournir un créneau d'exécution parallélisée.

Comme mentionné, le créneau d'exécution disponible peut être un créneau d'exécution parallélisé. Le créneau d'exécution parallélisé est un créneau partagé par plusieurs programmes d'objets connectés. Cela sera en particulier le cas lorsque, ledit créneau d'exécution parallélisé est un créneau d'exécution partagé lorsqu'il s'agit d'une deuxième exécution du programme d'objet connecté par le dispositif informatique d'exécution 20.

Le procédé comprend également une étape **d'exécution distante 400 du programme d'objet connecté.**
Cette étape d'exécution distante 400 est réalisée par le dispositif informatique d'exécution 20. Ainsi, alors que le programme d'objet connecté a pour objet la génération de résultat d'exécution utile à l'objet connecté, il est exécuté par un dispositif informatique appartenant au même sous-réseau que l'objet connecté demandeur IoT1. Ainsi, l'objet connecté demandeur peut être conçu avec une capacité de calcul ou d'exécution minimale sachant que les taches nécessitant des ressources informatiques diverses telles que de la puissance de calcul pourront être exécutées par un ou plusieurs dispositifs informatiques appartenant au même sous-réseau. L'appartenance à un même sous réseau est particulièrement avantageuse car cela permet de réaliser les calculs au plus proche des besoins et élimine la nécessité de faire transiter des données sur le réseau principal (e.g. internet) limitant ainsi les risques de saturation et les risques de sécurité.

Cette étape d'exécution distante 400 est réalisée avantageusement au cours du créneau d'exécution disponible. Ainsi, elle impactera un minimum le fonctionnement du dispositif informatique d'exécution 20 et pourra être couplée à l'exécution d'autres programmes d'objet connecté pour le même objet connecté demandeur IoT1 ou pour d'autres objets connectés IoT2.
Avantageuse, l'étape d'exécution distante 400 peut comprendre une étape de génération, par le dispositif informatique d'exécution 20, d'un environnement d'exécution adapté aux objets connectés demandeurs IoT1, IoT2 présents dans son réseau local 11. Un environnement d'exécution adapté peut par exemple correspondre à une machine virtuelle java, des interpréteurs Ruby ou encore Python.

L'étape d'exécution distante 400 peut également comprendre une étape de génération, par le dispositif informatique d'exécution 20, de plusieurs environnements d'exécution adaptés aux objets connectés demandeurs IoT1, IoT2 présents dans son réseau local 11. Les environnements d'exécution peuvent par ailleurs, être accessible simultanément ou séquentiellement.

Cette étape d'exécution distante 400 permet de générer un résultat d'exécution. Le résultat d'exécution pourra correspondre à une ou plusieurs valeurs. De façon générale, il pourra prendre la forme d'un fichier JSON, XML (eXtensible Markup Language en terminologie anglosaxonne), un fichier à plat, une image, une vidéo, ou un fichier son. Il pourra également correspondre à du code exécutable par l'objet connecté demandeur.
Le résultat d'exécution sera très largement fonction des choix d'implémentation de l'applicatif de l'objet connecté demandeurs.

Le procédé comprend également une étape **d'enregistrement 500 du profil de consommation de ressources** du programme d'objet connecté.
Cette étape est généralement réalisée par le dispositif informatique d'exécution 20. En particulier, l'étape d'enregistrement 500 pourra comporter la mémorisation du profil de consommation de ressource du programme d'objet connecté sur une mémoire de données du dispositif informatique d'exécution 20. Ce profil pourra ensuite être utilisé par le dispositif informatique d'exécution pour définir les prochains créneaux disponibles pour ce programme d'objet connecté.

L'étape d'enregistrement 500 est particulièrement pertinente lorsqu'il s'agit d'une première exécution du programme d'objet connecté par le dispositif informatique d'exécution 20. Néanmoins, l'étape d'enregistrement 500 du profil de consommation de ressources du programme d'objet connecté peut également être réalisée lors d'exécution ultérieure du programme d'objet connecté pour corriger ou confirmer le profil de consommation de ressources mémorisé pour ce programme d'objet connecté. En outre, il est pertinent lorsque le programme d'objet connecté est mis à jour, de réaliser une vérification du profil de consommation de ressources du programme d'objet connecté mis à jour et de réaliser un enregistrement d'un éventuel nouveau profil de consommation de ressources.

Le profil de consommation de ressource comporte de préférence des données permettant au dispositif informatique d'exécution de déterminer la durée d'exécution du programme d'objet connecté ainsi que l'influence de cette exécution sur les ressources disponibles.

Avantageusement, le profil de consommation de ressource peut correspondre au profil de consommation de ressource de plusieurs programmes d'objet connectés exécutés en parallèle. En effet, il peut y avoir une interaction entre les consommations de ressources de plusieurs programmes d'objet connecté utilisées en parallèles entrainant une consommation en ressources supérieure à la somme des consommations de ressources des programmes d'objet connectés exécutés individuellement.

L'enregistrement et la prise en compte ultérieure de ces profils de consommation au niveau du dispositif informatique d'exécution 20 permet de faire exécuter par le dispositif informatique d'exécution 20 un maximum de programme en un minimum de temps.

Les profils de consommation peuvent comporter des valeurs ou des pourcentages de consommation d'une ou de plusieurs ressources en fonction du temps. Ils peuvent aussi comporter des durées d'exécution.

Un profil de consommation de ressources peut être généré grâce à l'utilisation d'une ou de plusieurs sondes configurées pour collecter des données. La ou les sondes permettent par exemple de collecter des données sur l'utilisation des ressources, la disponibilité des ressources, les historiques des événements, les erreurs matérielles, les erreurs logicielles, les temps de réponse, le trafic des applications, la charge de service, le trafic réseau des modifications de fichiers, le nombre d'utilisateurs d'un service, le nombre de session, le nombre de processus, des valeurs de températures, des valeurs d'hygrométrie, de fuite d'eau, de mouvement, de fumée et la consommation électrique, des données d'authentification, des données de commandes à réaliser, des données d'état etc...

Il existe de nombreux types de sondes, et l'homme du métier sera en capacité de déterminer quel type de sonde pourra faire remonter vers un équipement informatique des mesures ou des valeurs. Ainsi, à titre d'exemple il peut s'agir de toute instruction exécutable capable de fournir des valeurs telle qu'une sonde de type « Dynatrace », « AppDynamics », « Nigel's Monitor » (Nmon) ou « Performance Monitor » (Perfmon). Par ailleurs les langages de programmation supportés peuvent être multiples et variés. Les sondes « Dynatrace » ou « Appdynamics » permettent par exemple l'accès à des données pertinentes sur l'état d'une application. Les sondes Nmon permettent par exemple d'afficher les données de CPU, mémoire, swap, réseau, des informations sur les utilisateurs, les groupes, les supports de stockages, sur l'utilisation du kernel, ou les processus les plus consommateurs. Les sondes de type Perfmon permettent de mesurer les performances d'une infrastructure informatique. Les informations collectées peuvent par exemple correspondre à des pourcentages d'utilisation de ressources, des temps de réponse, des temps de traitement mais également le statut des ports, le nombre de files de message JDBC ou JMS, le taux d'occupation du système de fichiers, le taux de fonctionnement du ramasse miettes ou récupérateur de mémoires (pour « garbage collector » en anglais) pour les applications J2EE (pour « Java Enterprise Edition » en anglais).

Ces sondes peuvent être configurées pour collecter des informations de consommation de ressources et éventuellement de niveau de services vers le dispositif informatique d'exécution 20. En outre, les sondes peuvent être associées à un type de données et définir un identifiant par type de données. La ou les sondes peuvent suivre en continu ou à des intervalles configurables les données de façon à obtenir des informations par type de donnée en fonction du temps. Le suivi en continu correspond par exemple à des mesures réalisées à une fréquence inférieure ou égale à une heure, de préférence inférieure ou égale à trente minutes, de façon plus préférée inférieure ou égale à cinq minutes, par exemple inférieure ou égale à dix secondes. A noter que toutes les données ne seront pas nécessairement mesurées à une fréquence identique. Ces données et informations peuvent être stockées dans une mémoire.

Dans certains modes de réalisation, le dispositif informatique d'exécution 20 selon l'invention comporte une interface homme-machine permettant de définir les sondes qui remontent les données d'objets connectés ou plus largement de dispositifs informatiques.

Ainsi, le procédé selon l'invention peut comporter une étape préalable facultative de configuration des sondes. L'étape de configuration des sondes peut comprendre la définition des données à collectées et/ou la définition de seuils correspondant par exemple à des valeurs minimales et/ou maximales de données à collecter ou encore à la définition d'une fréquence pour collecter les données. Ces informations peuvent être inscrites dans un fichier de configuration (par exemple pour chaque objet connecté, capteur et/ou pour chaque ressource). En outre, il peut par exemple s'agir de la définition préalable à la réalisation du procédé, d'indicateurs pertinents. Ces indicateurs pertinents peuvent être définis pour la surveillance des données. Ainsi, la configuration permet de définir des indicateurs pertinents pour la surveillance de données afin de paramétrer les données à surveiller. Avantageusement, la configuration permet d'éviter de surcharger l'objet connecté lors de la collecte de données. En effet, grâce à la configuration d'indicateurs pertinents, seules les données nécessaires seront surveillées et collectées. De plus, la configuration permet d'assurer des indicateurs pertinents pouvant être référencés par exemple dans un référentiel.

Le procédé comprend également une étape **d'accès 600 au résultat d'exécution.**
L'accès au résultat d'exécution sera fait généralement par l'objet connecté demandeur IoT1.
Cet accès pourra par exemple prendre la forme de la réception d'un message en provenance du dispositif informatique d'exécution 20 comportant le résultat d'exécution. Alternativement, le message en provenance du dispositif informatique d'exécution 20 pourra comporter une adresse URL pointant vers un ficher comportant le résultat d'exécution.
Alternativement, l'objet connecté demandeurs IoT1 aura pu indiquer dans le message de requête d'exécution distante une adresse URL au niveau de laquelle le dispositif informatique d'exécution 20 pourra charger le résultat d'exécution.

Comme illustré à la figure 2, le procédé d'exécution distante 1 de programmes d'objets connectés dans un réseau local 11 peut également comporter une étape de mise à jour 700 des profils enregistrés de consommation de ressources de programmes d'objet connecté lors du créneau d'exécution parallélisé.

Comme illustré à la figure 2, le procédé d'exécution distante 1 de programmes d'objets connectés dans un réseau local 11 peut également comporter une étape de planification de recherche de mise à jour 800 du programme d'objet connecté selon une règle de périodicité de mise à jour contenue dans le message de requête d'exécution distante.

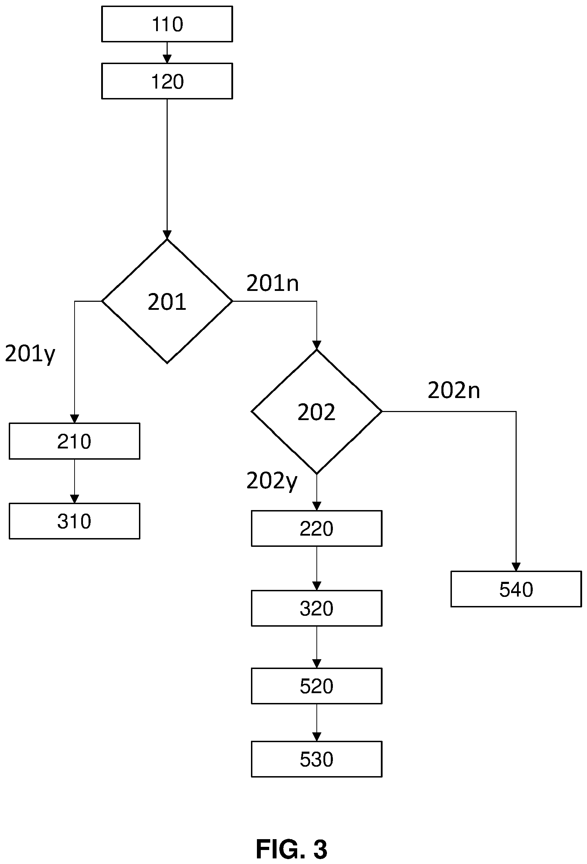

Un exemple de mise en œuvre de la présente invention est illustré à la **figure 3****.**

Cet exemple permet d'illustrer plus en avant les différentes caractéristiques facultatives et avantageuses d'un procédé d'exécution distante 1 de programmes d'objets connectés selon l'invention.

Comme illustré à la figure 3, le procédé selon un mode de réalisation de l'invention peut comprendre une étape préalable de découverte, par un objet connecté demandeur loT1, du ou des dispositifs informatiques d'exécution 20 présent sur son réseau local. Cette **étape de découverte 110** de dispositif informatique d'exécution disponible peut comprendre initialement la connexion de l'objet connecté demandeur IoT1 à des sous-réseaux disponibles. Les différentes étapes et caractéristiques particulières de cette connexion seront dépendantes des sous-réseaux concernés. Par exemple, la connexion peut comporter des étapes d'attachement initial, d'authentification et d'attribution d'une adresse IP.

L'étape de découverte 110 peut comporter la diffusion par l'objet connecté demandeur loT1, d'un message d'interrogation (« Broadcast Message » en terminologie anglosaxonne) dans un ou plusieurs sous-réseaux de transport de données. Ce message d'interrogation est alors reçu par un dispositif informatique d'exécution 20 qui pourra répondre pour l'informer de sa présence. L'objet connecté demandeur IoT1 peut alors envoyer 120 un message de requête d'exécution distante au dispositif informatique d'exécution 20.
Un fois un message de requête d'exécution distante réceptionné, le dispositif informatique d'exécution 20 peut analyser ce message et notamment déterminer s'il y a eu une exécution préalable du programme d'objet connecté par ce dispositif informatique d'exécution 20.
En outre, comme cela a été mentionné et illustré à la figure 3, le procédé selon l'invention peut prendre en compte un niveau de priorité spécifié par exemple dans le message de requête d'exécution distante. En particulier, il pourra comporter une étape visant à déterminer 201 l'urgence 201y ou au contraire l'absence d'urgence 201n pour l'exécution de ce programme d'objet connecté.
Par exemple, un procédé d'exécution distante 1 de programmes d'objets connectés pourra comporter une étape d'identification 210, par le dispositif informatique d'exécution 20, de règles d'exécution prioritaires et en particulier de nouvelles règles d'exécution prioritaires.
Alors que les règles d'exécution prioritaires font référence à l'exécution d'un programme d'objet connecté ayant déjà fait l'objet d'une exécution, les nouvelles règles d'exécution prioritaires font référence à une première exécution du programme d'objet connecté par le dispositif informatique d'exécution 20.

Ainsi, l'établissement d'un ordonnancement pourra prendre en compte l'urgence ou la priorité qui peut être établie par l'objet connecté demandeur IoT1.
Dans ce contexte, le procédé pourra comporter une étape d'ordonnancement prioritaire 310 des nouvelles règles d'exécution prioritaires de préférence des nouvelles règles d'exécution prioritaires. L'étape d'ordonnancement prioritaire est généralement mise en œuvre par le dispositif informatique d'exécution 20.

Cette étape d'ordonnancement pourra prendre en compte des informations d'exécution ordonnancées mémorisées, des profils de consommation de ressources mémorisés et des règles d'exécution du message de requête d'exécution distante.
Avantageusement, et en l'absence de créneau d'exécution exclusive dans un délai prédétermine (e.g. 1 heure, 6 heures, 1 journée), l'étape d'ordonnancement prioritaire 310 pourra comporter l'identification d'un créneau d'exécution parallélisé. Etant donné que l'exécution du programme d'objet connecté est considérée comme prioritaire par l'objet connecté demandeur IoT1, il y a attribution d'un créneau au plus vite. Cela peut aussi être le cas de nouvelles règles d'exécution prioritaires.
De façon préféré, en cas de parallélisation d'un programme d'objet connecté n'ayant jamais fait l'objet d'une exécution par le dispositif informatique d'exécution 20, le dispositif informatique d'exécution sera configuré pour sélectionner un créneau d'exécution parallélisé présentant un pourcentage de ressources disponible le plus élevé.

En outre, comme cela a été mentionné et illustré à la figure 3, le procédé selon l'invention peut prendre en compte une récurrence au niveau de l'exécution de programme d'objet connecté. Le procédé pourra comporter une étape visant à déterminer 202 la récurrence 202y ou au contraire l'absence de récurrence 202n pour l'exécution de ce programme d'objet connecté. Cette récurrence peut notamment être identifiée par le dispositif informatique d'exécution dans le message de requête d'exécution distante via une fréquence d'exécution du programme d'objet connecté. Ainsi, le procédé d'exécution distante 1 selon l'invention pourra comporter une étape d'identification 220 de nouvelles règles d'exécution récurrentes. Cette identification sera généralement réalisée par le dispositif informatique d'exécution 20.

En cas de récurrence identifiée, le procédé d'exécution distante 1 selon l'invention pourra comporter une étape d'ordonnancement de calibration 320 de nouvelles règles d'exécution récurrentes en fonction des informations d'exécution ordonnancées mémorisées, des profils de consommation de ressources mémorisés et des règles d'exécution du message de requête d'exécution distante. Une telle étape dite d'ordonnancement de calibration 320 permettra une attribution d'un premier créneau d'exécution exclusive par le dispositif informatique d'exécution 20. Ainsi, un programme d'objet connecté destiné à être exécuté fréquemment fera l'objet d'une première exécution exclusive sur le dispositif informatique d'exécution 20.
Le procédé pourra alors comporter une étape d'enregistrement 520 du profil de consommation de ressources du programme d'objet connecté lors du premier créneau d'exécution exclusive. Ainsi, le dispositif informatique d'exécution 20 est configuré pour obtenir un profil de consommation de ressource lors de l'exécution de ce programme d'objet connecté dont une exécution récurrente est à configurer.

Le procédé pourra comporter ensuite une étape d'ordonnancement récurrent 530 pour l'attribution de créneaux d'exécution parallélisés récurrents en fonction des informations d'exécution ordonnancées mémorisées, des profils de consommation de ressources mémorisés et du profil de consommation de ressources du programme d'objet connecté lors du premier créneau d'exécution exclusive.

En outre, comme cela a été mentionné et illustré à la figure 3, le procédé selon l'invention est particulièrement adapté pour optimiser l'utilisation des ressources du dispositif informatique d'exécution. En particulier, le procédé prévoit la mise en place d'étape d'ordonnancement de façon à ce que les exécutions de programme d'objet connectés soient parallélisées de façon à livrer au plus vite les résultats d'exécution sans causer de défaillance au niveau du dispositif informatique d'exécution. En effet, un des objectifs de la présente invention est de faire passer un maximum de traitement en un minimum de temps et donc optimiser les ordonnancement d'exécution et d'en paralléliser au maximum.
Ainsi de façon avantageuse, le procédé selon l'invention peut comporter une étape de planification optimisée de l'exécution de programmes d'objets connectés, ladite étape de planification optimisée comportant l'établissement de créneau d'exécution parallélisé optimisé permettant une consommation paramétrable d'au moins une ressource du dispositif informatique d'exécution lors du créneau d'exécution parallélisé optimisé. Ainsi, de façon avantageuse, les niveaux de consommation des ressources du dispositif informatique d'exécution peuvent être déterminés pour chaque ressource. Ce qui permet d'affiner les ressources du dispositif informatique d'exécution et de façon avantageuse en fonction du programme d'objet connecté. Par exemple, un fichier de configuration peut être utilisé pour fixer pour chaque ressource un niveau de consommation maximum, par exemple 80 % CPU, 95 % mémoire.
De façon préférée, l'étape de planification optimisée comporte l'établissement de créneau d'exécution parallélisé optimisé permettant, lors du créneau d'exécution parallélisé optimisé, une consommation d'au moins une ressource supérieure à un seuil prédéterminé de consommation minimale. De façon plus préférée, l'établissement de créneau d'exécution parallélisé optimisé est tel qu'il permet, lors du créneau d'exécution parallélisé optimisé, une consommation de chacune des ressources inférieures à un seuil prédéterminé de consommation maximale.
De façon préférée, le procédé selon l'invention comporte une étape d'enregistrement 540 du profil de consommation de ressources du programme d'objet connecté d'une nouvelle exécution du programme d'objet connecté par le dispositif informatique d'exécution 20. Cette enregistrement peut être réalisé par le dispositif informatique d'exécution 20.

En outre, un procédé selon l'invention pourra comporter une étape d'enregistrement de profils de consommation de ressources lors d'un créneau d'exécution parallélisé de programmes d'objet connecté. En effet comme mentionné, il est possible que des exécutions concomitantes de plusieurs programmes d'objet connectés entraine une consommation de certaines ressources du dispositif informatique d'exécution supérieure à la somme des consommations individuelles.
Ainsi, le procédé peut également comporter une étape de mise à jour des profils enregistrés de consommation de ressources de programmes d'objet connecté de façon à mémoriser les profils de consommation de ressources lors d'un créneau d'exécution parallélisé de programmes d'objet connecté. Ainsi, lors de l'étape de planification d'exécution 300 du programme d'objet connecté ces profils de consommation de ressources obtenus lors d'un créneau d'exécution parallélisé pourront être utilisé de façon à obtenir une estimation plus fine de la charge sur le dispositif informatique d'exécution 20.

En particulier, lors de la parallélisation de plusieurs programmes d'objet connectés, le procédé selon l'invention pourra réaliser la planification sur la base de règles d'exécution propres au dispositif informatique d'exécution comportant par exemple des seuils maximum de ressources utilisables. Ainsi, le risque de défaillance du dispositif informatique d'exécution est réduit.

Comme cela sera apprécié par l'homme de l'art, des aspects de la présente invention peuvent être réalisés en tant que dispositif, système, procédé ou produit de programme d'ordinateur. En conséquence, des aspects de la présente invention peuvent prendre la forme d'un mode de réalisation entièrement matériel, d'un mode de réalisation entièrement logiciel (comprenant un micrologiciel, un logiciel résident, un microcode, etc.) ou d'un mode de réalisation particulier tel que comme un "circuit", "module" ou "système". En outre, des aspects de la présente invention peuvent prendre la forme d'un produit de programme d'ordinateur incorporé dans un ou plusieurs supports lisibles par ordinateur ayant un code de programme lisible par ordinateur incorporé sur celui-ci.

En particulier, les étapes du procédé d'authentification selon l'invention décrit précédemment peuvent prendre la forme d'un programme informatique.

Ainsi, **selon un autre aspect,** l'invention porte sur **un programme informatique** (e.g. un programme d'ordinateur) comprenant des instructions de code de programme pour l'exécution des étapes d'un procédé selon l'invention lorsque ledit programme informatique est exécuté sur un dispositif informatique tel qu'un ordinateur. Un code de programme informatique pour effectuer des opérations pour des aspects de la présente invention peut être écrit dans n'importe quelle combinaison d'un ou plusieurs langages de programmation, y compris un langage de programmation orienté objet tel que Java, C ++ ou similaire, le langage de programmation "C" ou des langages de programmation similaires, un langage de script tel que Perl, ou des langages similaires, et/ou des langages fonctionnels tels que Meta Langage. Le code de programme peut s'exécuter entièrement sur objet connecté, en partie sur l'ordinateur d'un utilisateur et en partie sur un ordinateur distant ou entièrement sur l'ordinateur ou le serveur distant. Dans ce dernier scénario, l'ordinateur distant peut être connecté à l'ordinateur d'un utilisateur par tout type de réseau, y compris un réseau local (LAN) ou un réseau étendu (WAN).

Ces instructions de programme d'ordinateur peuvent être stockées sur un support lisible par ordinateur pouvant diriger un dispositif informatique (e.g. ordinateur, serveur...), de sorte que les instructions stockées dans le support lisible par ordinateur permettent la mise en place d'un dispositif informatique d'exécution.

Toute combinaison d'un ou plusieurs supports lisibles par ordinateur peut être utilisée. Dans le contexte de ce document, un support lisible par ordinateur peut être n'importe quel support tangible qui peut contenir, ou stocker un programme à utiliser par ou en relation avec un système d'exécution d'instructions, appareil ou dispositif. Un support lisible par ordinateur peut être, par exemple, mais sans s'y limiter, un système, appareil ou dispositif électronique, magnétique, optique, électromagnétique, infrarouge ou semi-conducteur, ou toute combinaison appropriée de ce qui précède. Des exemples plus spécifiques (une liste non exhaustive) du support de stockage lisible par ordinateur comprendraient : un disque dur, une mémoire vive (RAM).
De même, l'invention porte sur un **support informatique, en particulier un support d'enregistrement lisible par ordinateur,** sur lequel est mémorisé un programme informatique selon l'invention. Toute combinaison d'un ou plusieurs supports lisibles par ordinateur peut être utilisée. Dans le contexte de ce document, un support lisible par ordinateur peut être n'importe quel support tangible qui peut contenir, ou stocker un programme à utiliser par ou en relation avec un système d'exécution d'instructions, appareil ou dispositif. Un support lisible par ordinateur peut être, par exemple, mais sans s'y limiter, un système, appareil ou dispositif électronique, magnétique, optique, électromagnétique, infrarouge ou semi-conducteur, ou toute combinaison appropriée de ce qui précède. Des exemples plus spécifiques (une liste non exhaustive) du support de stockage lisible par ordinateur comprendraient : un disque dur, une mémoire vive (RAM).

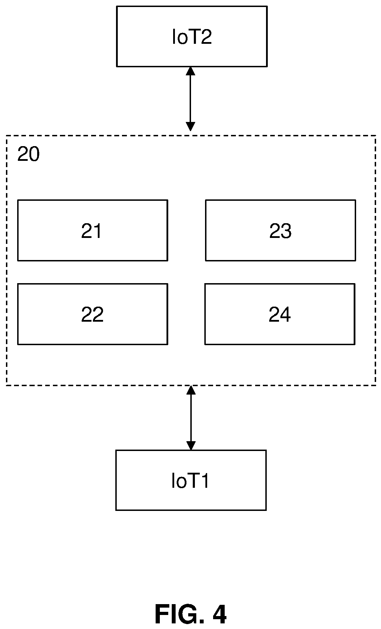

**Selon un autre aspect,** et comme illustré à la **figure 4****,** l'invention se rapporte à **un dispositif informatique d'exécution 20** pour une exécution distante 1 de programmes d'objets connectés dans un réseau local 11. En outre, le dispositif informatique d'exécution 20 selon l'invention est en particulier configuré pour mettre en œuvre une ou plusieurs étapes du procédé selon l'invention.
Le dispositif informatique d'exécution 20 peut être une tablette, un ordinateur portable, un ordinateur de bureau, un téléphone intelligent, un lecteur de livre électronique, un lecteur de musique ou tout autre dispositif informatique portable ou stationnaire approprié. Le dispositif informatique d'exécution 20 peut comprendre un ou plusieurs processeurs configurés pour exécuter des instructions stockées par un support lisible par ordinateur pour effectuer diverses opérations client, telles que les entrées / sorties, la communication, le traitement des données, etc. Le dispositif informatique d'exécution 20 comprend une ou plusieurs interfaces réseau à travers lesquelles il peut établir des connexions sans fil ou câblées à un ou plusieurs réseaux, tels que le réseau internet. Le dispositif informatique d'exécution 20 exécute également des applications, par exemple, une interface homme machine peut permettre de configurer le dispositif informatique d'exécution.

Ainsi, selon un mode de réalisation, le dispositif informatique d'exécution 20 peut comprendre ou être couplé à **un ou plusieurs moyens 23 de collecte de données.** Un moyen 23 de collecte de données peut comprendre une ou plusieurs sondes afin de collecter les données de consommation de ressource du dispositif informatique d'exécution 20. La ou les sondes permettent par exemple de collecter des données sur les programmes d'objet connecté s'exécutant sur le dispositif informatique d'exécution 20 en temps réel et en continu. Le moyen 23 de collecte peut faire appel à un fichier de surveillance comportant des règles de collecte de métriques. Ces règles de collecte de métriques peuvent spécifier des données qui doivent être enregistrées lors de l'exécution du programme d'objet connecté.

Les sondes peuvent être associées à chaque donnée de processus ou données de ressources (e.g. consommation CPU, RAM) pour remonter les informations de mesure ou métriques.

Pour chaque donnée de consommation de ressource, la ou les sondes définissent un identifiant et une valeur. Les données de consommation de ressource peuvent être suivies en continu ou à des intervalles configurables de façon à obtenir des informations pour chaque donnée en fonction du temps. Ces informations peuvent être stockées dans une mémoire. Dans certains modes de réalisation, une interface homme-machine permet de définir les sondes sur chaque machine qui remontent les métriques.

De préférence un moyen de collecte de données collecte les données en temps réel et en continu.

Selon un mode de réalisation, le dispositif informatique d'exécution 20 peut comprendre ou être couplé à **un ou plusieurs processeurs 22.** Un processeur 22 peut être configuré en particulier pour exécuter un ou plusieurs programmes d'objet connecté dans un seul environnement d'exécution ou dans plusieurs environnements d'exécution de façon exclusive ou de façon parallélisée. En outre, un processeur 22 est avantageusement configuré pour exécuter une ou plusieurs étapes du procédé selon l'invention.
De préférence, le ou les processeurs 22 sont aptes à, de préférence configurés pour, vérifier une exécution préalable du programme d'objet connecté par le dispositif informatique d'exécution 20. En outre, le ou les processeurs sont aptes à, de préférence configurés pour, planifier une exécution 300 du programme d'objet connecté par exemple en fonction des informations d'exécution ordonnancées mémorisées, des profils de consommation de ressources mémorisés et/ou des règles d'exécution du message de requête d'exécution distante. De plus, le ou les processeurs 22 peuvent être aptes à, de préférence configurés pour, exécuter un programme d'objet connecté au cours d'un créneau d'exécution disponible de façon à générer un résultat d'exécution.

En outre, le dispositif informatique d'exécution 20 peut comprendre ou être couplé à une ou plusieurs **mémoires de données 21** aptes à, de préférence configurées pour, enregistrer, stocker des profils de consommation de ressources du programme d'objet connecté. En particulier, elle peut être configurée pour stocker des informations d'exécution ordonnancées et des profils de consommation de ressources de programmes d'objet connecté. Par exemple, une mémoire de données peut comprendre un référentiel comportant des données sur les exécutions de programme d'objet connecté par le dispositif informatique d'exécution 20. En outre, une mémoire de données 21 peut être configurée pour mémoriser des règles d'exécution pour l'exécution d'un programme d'objet connecté et des paramètres d'entrée pour ledit programme d'objet connecté.
Une mémoire de données peut avantageusement comporter une section non effaçable, physiquement isolée ou simplement agencée pour qu'un accès en écriture ou en effacement soit proscrit. Une mémoire de données peut en outre être agencée pour enregistrer les données mesurées par les sondes. Une mémoire de données peut en outre comprendre un ou plusieurs programmes, ou plus généralement un ou plusieurs ensembles d'instructions de programmes, lesdites instructions de programmes étant intelligibles par le processeur. L'exécution ou l'interprétation desdites instructions par ledit processeur provoque la détermination des périodes de temps de disponibilité d'accès à Internet.
De façon préférée, une mémoire de données est configurée pour mémoriser des informations d'exécution ordonnancées mémorisées, des profils de consommation de ressources mémorisés et des règles d'exécution du message de requête d'exécution distante. En outre, selon un mode de réalisation, la mémoire de données est configurée pour mémoriser un ou plusieurs programmes d'objet connectés. La mémoire de données peut également être configurée pour comprendre un ou plusieurs référentiels, par exemple pour mémoriser un référentiel comprenant des règles de priorisation en fonction des programmes d'objets connecté à exécuter. Par ailleurs, une mémoire de données peut également être configurée pour mémoriser des fichiers de configuration pour fixer pour chaque ressource un niveau de consommation maximum.
Selon un mode de réalisation, le dispositif informatique d'exécution 20 peut comprendre ou être couplé à un ou plusieurs **moyens de communication 24.** Un moyen 24 de communication peut en particulier être configuré pour recevoir une requête d'exécution distante et pour transmettre ou mettre à disposition des résultats d'exécution à un objet connecté demandeur IoT1.
Par exemple, il peut s'agir d'adresse IP d'émission ou de destination, de port, de passerelle de connexion, utilisant des protocoles de communications adaptés filaire ou non filaire, par exemple TCP (Transport Control Protocol en terminologie anglo-saxonne),TCP/IP, RTP (Real Time Transport Protocol en terminologie anglo-saxonne), UDP (User Data Protocol en terminologie anglo-saxonne), SCTP (Stream Control Transmission Protocol en terminologie anglo-saxonne) afin de réceptionner un message de requête ou de transmettre un message de réponse.
**Selon un autre aspect** l'invention se rapporte à **un système 2 pour une exécution distante de programme d'objet connecté.**
En particulier, le système 2 comprend un dispositif informatique d'exécution 20 tel que décrit précédemment et au moins un objet connecté demandeur IoT1. En outre, le dispositif informatique d'exécution 20 et l'objet connecté demandeur IoT1 sont connectés à un même réseau local 11.
Comme décrit, les modes de réalisation présentés ici fournissent des techniques pour permettre une exécution distante d'un programme d'objet connecté par un dispositif informatique. Avantageusement, cette approche permet d'organiser les exécutions de programmes d'objet connecté et fournir les résultats aux objets connectés sans qu'il soit nécessaire de prévoir des objets connectés à forte capacité de calcul.
Bien que ce qui précède concerne des modes de réalisation de la présente invention, d'autres modes de réalisation de l'invention peuvent être conçus sans s'écarter de sa portée de base, et sa portée est déterminée par les revendications qui suivent.

## Revendications

1. Procédé d'exécution distante (1) de programme(s) d'objet connecté dans un réseau local (11), ledit réseau local (11) comprenant un dispositif informatique d'exécution (20) et au moins un objet connecté demandeur (IoT1), ledit dispositif informatique d'exécution (20) comportant : une mémoire de données (21) configurée pour stocker des informations d'exécution ordonnancées et des profils de consommation de ressources de programme d'objet connecté ; ledit procédé d'exécution distante comprenant :
- une étape de requête d'exécution distante (100), par l'objet connecté demandeur (IoT1), ladite étape comportant l'envoi d'un message de requête d'exécution distante de l'objet connecté demandeur (IoT1) au dispositif informatique d'exécution (20), ledit message de requête d'exécution distante comportant des règles d'exécution pour l'exécution d'un programme d'objet connecté ;
- une étape de vérification (200) d'une exécution préalable du programme d'objet connecté par le dispositif informatique d'exécution (20) ;
- une étape de planification d'exécution (300), par le dispositif informatique d'exécution (20), du programme d'objet connecté en fonction des informations d'exécution ordonnancées mémorisées, des profils de consommation de ressources mémorisés et des règles d'exécution du message de requête d'exécution distante, ladite planification comprenant l'identification d'un créneau d'exécution disponible, ledit créneau d'exécution disponible étant un créneau d'exécution exclusive par exemple lorsqu'il s'agit d'une première exécution du programme d'objet connecté par le dispositif informatique d'exécution (20) ; ou un créneau d'exécution parallélisé, ledit créneau d'exécution parallélisé étant un créneau d'exécution partagé par exemple lorsqu'il s'agit d'une deuxième exécution du programme d'objet connecté par le dispositif informatique d'exécution (20) ;
- une étape d'exécution distante (400) du programme d'objet connecté, par le dispositif informatique d'exécution (20), au cours du créneau d'exécution disponible, de façon à générer un résultat d'exécution ;
- une étape d'enregistrement (500), par le dispositif informatique d'exécution (20), du profil de consommation de ressources du programme d'objet connecté lorsqu'il s'agit d'une première exécution du programme d'objet connecté par le dispositif informatique d'exécution (20) ; et
- une étape d'accès (600), par l'objet connecté demandeur (IoT1), au résultat d'exécution.

2. Procédé d'exécution distante (1) selon la revendication 1, **caractérisé en ce qu'**il comporte en outre une étape d'identification (210), par le dispositif informatique d'exécution (20), de nouvelles règles d'exécution prioritaires, lesdites nouvelles règles d'exécution prioritaires étant relatives à une première exécution du programme d'objet connecté par le dispositif informatique d'exécution (20) et une étape d'ordonnancement prioritaire (310), par le dispositif informatique d'exécution (20), des nouvelles règles d'exécution prioritaires en fonction des informations d'exécution ordonnancées mémorisées, des profils de consommation de ressources mémorisés et des règles d'exécution du message de requête d'exécution distante, ladite étape d'ordonnancement prioritaire (310) comportant, en l'absence de créneau d'exécution exclusive, l'identification d'un créneau d'exécution parallélisé.

3. Procédé d'exécution distante (1) selon la revendication 1, **caractérisé en ce qu'**il comporte en outre une étape d'identification (220), par le dispositif informatique d'exécution (20), de nouvelles règles d'exécution récurrentes et il comporte en outre :
- une étape d'ordonnancement de calibration (320), par le dispositif informatique d'exécution (20), des nouvelles règles d'exécution récurrentes en fonction des informations d'exécution ordonnancées mémorisées, des profils de consommation de ressources mémorisés et des règles d'exécution du message de requête d'exécution distante, ladite étape d'ordonnancement de calibration (320) comportant une attribution d'un premier créneau d'exécution exclusive,
- une étape d'enregistrement (520), par le dispositif informatique d'exécution (20), du profil de consommation de ressources du programme d'objet connecté lors du premier créneau d'exécution exclusive; et
- une étape d'ordonnancement récurrent (530) pour l'attribution de créneaux d'exécution parallélisés récurrents en fonction des informations d'exécution ordonnancées mémorisées, des profils de consommation de ressources mémorisés et du profil de consommation de ressources du programme d'objet connecté lors du premier créneau d'exécution exclusive.

4. Procédé d'exécution distante (1) selon l'une quelconque des revendications 1 à 3, **caractérisé en ce que** le dispositif informatique d'exécution (20) présente un référentiel comprenant des règles de priorisation en fonction de programme(s) d'objet connecté à exécuter et **en ce que** l'étape de planification d'exécution (300) prend également en compte les règles de priorisation.

5. Procédé d'exécution distante (1) selon l'une quelconque des revendications 1 à 4, **caractérisé en ce qu'**il comporte en outre une étape d'enregistrement du programme d'objet connecté sur la mémoire de données du dispositif informatique d'exécution.

6. Procédé d'exécution distante (1) selon l'une quelconque des revendications 1 à 4, **caractérisé en ce qu'**il comporte en outre une étape d'accès au programme d'objet connecté par le dispositif informatique d'exécution à partir d'une adresse URL.

7. Procédé d'exécution distante (1) selon l'une quelconque des revendications 1 à 6, **caractérisé en ce qu'**il comporte en outre une étape d'enregistrement (530), par le dispositif informatique d'exécution (20), du profil de consommation de ressources du programme d'objet connecté lors d'une nouvelle exécution du programme d'objet connecté par le dispositif informatique d'exécution (20), et **en ce qu'**il comporte une étape d'enregistrement (540) de profils de consommation de ressources lors d'un créneau d'exécution parallélisé de programme(s) d'objet connecté et une étape de mise à jour (700) des profils enregistrés de consommation de ressources de programme(s) d'objet connecté lors du créneau d'exécution parallélisé.

8. Procédé d'exécution distante (1) selon l'une quelconque des revendications 1 à 7, **caractérisé en ce qu'**il comporte une étape de planification optimisée (350) de l'exécution de programme d'objet connecté, ladite étape de planification optimisée (350) comportant l'établissement de créneau d'exécution parallélisé optimisé permettant une consommation paramétrable d'au moins une ressource du dispositif informatique d'exécution lors du créneau d'exécution parallélisé optimisé.

9. Procédé d'exécution distante (1) selon l'une quelconque des revendications 1 à 8, **caractérisé en ce qu'**il comporte en outre une étape de génération (410), par le dispositif informatique d'exécution (20), d'un environnement d'exécution adapté aux objets connectés demandeurs (loT1, IoT2) présents dans son réseau local (11).

10. Procédé d'exécution distante (1) selon l'une quelconque des revendications 1 à 8, **caractérisé en ce qu'**il comporte en outre une étape de génération (440), par le dispositif informatique d'exécution (20), de plusieurs environnements d'exécution adaptés aux objets connectés demandeurs (IoT1, IoT2) présents dans son réseau local (11).

11. Procédé d'exécution distante (1) selon l'une quelconque des revendications 1 à 10, **caractérisée en ce qu'**il comporte en outre une étape de planification de mise à jour (800) du programme d'objet connecté selon une règle de périodicité de mise à jour contenue dans le message de requête d'exécution distante.

12. Procédé d'exécution distante (1) selon l'une quelconque des revendications 1 à 11, **caractérisée en ce que** les règles d'exécution comportent en outre un protocole de communication permettant à l'objet connecté demandeur (IoT1) de récupérer le résultat d'exécution.

13. Produit programme d'ordinateur pour une exécution distante de programme(s) d'objet connecté dans un réseau local (11) comprenant des instructions qui, lorsque le programme est exécuté par un ordinateur, conduisent celui-ci à mettre en œuvre les étapes du procédé d'exécution distante (1) selon l'une des revendications 1 à 12.

14. Dispositif informatique d'exécution (20) configuré pour réaliser une exécution distante de programme(s) d'objet connecté, ledit dispositif informatique d'exécution (20) comportant une mémoire de données (21) configurée pour stocker des informations d'exécution ordonnancées et des profils de consommation de ressources de programme d'objet connecté ; ledit dispositif informatique d'exécution (20) comportant en outre un ou plusieurs processeurs configurés pour exécuter les étapes suivantes :
- une étape de réception d'une requête d'exécution distante, ladite étape de réception comportant la réception d'un message de requête d'exécution distante provenant d'un objet connecté demandeur (IoT1), ledit message de requête d'exécution distante comportant des règles d'exécution pour l'exécution d'un programme d'objet connecté ;
- une étape de vérification d'une exécution préalable du programme d'objet connecté par le dispositif informatique d'exécution (20) ;
- une étape de planification d'exécution du programme d'objet connecté en fonction des informations d'exécution ordonnancées mémorisées, des profils de consommation de ressources mémorisés et des règles d'exécution du message de requête d'exécution distante, ladite planification comprenant l'identification d'un créneau d'exécution disponible, ledit créneau d'exécution disponible étant un créneau d'exécution exclusive par exemple lorsqu'il s'agit d'une première exécution du programme d'objet connecté par le dispositif informatique d'exécution (20) ; ou un créneau d'exécution parallélisé, ledit créneau d'exécution parallélisé étant un créneau d'exécution partagé lorsqu'il s'agit d'une deuxième exécution du programme d'objet connecté par le dispositif informatique d'exécution (20),
- une étape d'exécution distante du programme d'objet connecté au cours du créneau d'exécution disponible, de façon à générer un résultat d'exécution ;
- une étape d'enregistrement du profil de consommation de ressources du programme d'objet connecté lorsqu'il s'agit d'une première exécution du programme d'objet connecté par le dispositif informatique d'exécution (20) ; et
- une étape de mise à disposition du résultat d'exécution à l'objet connecté demandeur (IoT1).

15. Système (2) comprenant un dispositif informatique d'exécution (20) selon la revendication précédente et au moins un objet connecté demandeur (IoT1), lesdits dispositif informatique d'exécution (20) et objet connecté demandeur (IoT1) étant connectés à un même réseau local (11).
